(19) **Europäisches Patentamt / European Patent Office / Office européen des brevets**

(11) **EP 4 685 582 B1**

(12) **EUROPEAN PATENT SPECIFICATION**

(45) Date of publication and mention of the grant of the patent:
**10.06.2026 Bulletin 2026/24**

(21) Application number: **24191081.9**

(22) Date of filing: **26.07.2024**

(51) International Patent Classification (IPC):
**G05B 13/02** *(2006.01)* **F23G 5/50** *(2006.01)*
**B07C 5/36** *(2006.01)* **G06N 7/01** *(2023.01)*
**G05B 19/418** *(2006.01)*

(52) Cooperative Patent Classification (CPC):
**G05B 19/41815; F23G 5/50; G05B 13/0265;**
**G06N 7/01;** F23G 2900/55011; G05B 2219/39106;
G05B 2219/40007; G05B 2219/45063

(54) **COMPUTER SYSTEM AND METHOD FOR EVALUATING PHYSICAL STREAM SAMPLE PROPERTIES**

COMPUTERSYSTEM UND VERFAHREN ZUR BEURTEILUNG DER EIGENSCHAFTEN VON PHYSIKALISCHEN STREAM-PROBEN

SYSTÈME INFORMATIQUE ET PROCÉDÉ D'ÉVALUATION DE PROPRIÉTÉS D'ÉCHANTILLON DE FLUX PHYSIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**28.01.2026 Bulletin 2026/05**

(73) Proprietor: **EDI AKTIENGESELLSCHAFT**
**76229 Karlsruhe (DE)**

(72) Inventors:
• **Quentel, Tobias**
**Karlsruhe 76229 (DE)**
• **Mounir, Mariem**
**76229 Karlsruhe (DE)**
• **Bähr, Armin**
**76229 Karlsruhe (DE)**
• **El-Haji, Mohanad**
**76229 Karlsruhe (DE)**

• **Freudenmann, Thomas**
**76229 Karlsruhe (DE)**

(74) Representative: **Fleuchaus & Gallo Partnerschaft mbB**
**Steinerstraße 15/A**
**81369 München (DE)**

(56) References cited:
JP-A- 2022 092 448  KR-B1- 102 619 347
US-A1- 2021 276 226

• ALITAPPEH REZA JAVANMARD ET AL: "Revolutionizing Waste Management: A Smart Materials Recovery Facilility With Robotic and AI Integration", 2024 20TH CSI INTERNATIONAL SYMPOSIUM ON ARTIFICIAL INTELLIGENCE AND SIGNAL PROCESSING (AISP), IEEE, 21 February 2024 (2024-02-21), pages 1 - 6, XP034577307, [retrieved on 20240325], DOI: 10.1109/AISP61396.2024.10475232

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical Field**

The present invention generally relates to multi-processor systems, and more particularly, relates to methods, computer program products and systems for evaluating one or more properties of a physical stream sample.

**Background**

It is advantageous to evaluate and predict properties of a physical stream sample, which are relevant parameters for optimization of a stream sample processing method used for processing said sample. A stream sample, as used herein, is a physical sample which moves through processing means performing said stream sample processing method.

US patent 5,121,467 discloses a combined neural network/expert system process and a method combining decision-making capabilities of expert systems with predictive capabilities of neural networks for improved process control. Neural networks provide predictions of measurements which are difficult to make, or supervisory or regulatory control changes which are difficult to implement using classical control techniques. Expert systems make decisions automatically based on knowledge which is well-known and can be expressed in rules or other knowledge representation forms. Sensor and laboratory data is used. In one approach, the output data from the neural network can be used by the controller in controlling the process, and the expert system can make a decision using sensor or lab data to control the controller(s). In another approach, the output data of the neural network can be used by the expert system in making its decision, and control of the process carried out using lab or sensor data. In another approach, the output data can be used both to control the process and to make decisions. In all approaches, the system's neural network parameters (number of neurons, layers, etc.) are adjusted by the calibration of the inputs of the neural network via human input.

In this prior art solution, predictions are made to avoid or at least reduce physical measurements for improved process control of a production process of low variability. The inputs for the neural network are already known by the system to make predictions of the final processing results. In many industrial process flow methods, the input parameters are not known for an incoming stream sample, which requires a higher degree of flexibility compared to the prior art system.

Korean patent KR102619347 (B1) relates to a system for stabilizing the temperature of an incinerator. The system has a prediction unit for predicting a predicted temperature according to a change in the temperature of the exhaust gas predicted when the carried-in waste corresponding to the carried-in waste information is put into the incinerator and calculates a waste classification standard and a waste input ratio for correcting the predicted temperature to an appropriate temperature included in a predetermined appropriate temperature range when the predicted temperature is not included in the predetermined appropriate temperature range. Japanese patent application JP2022092448 (A) predicts data to be used for efficient control of an incineration system in order to accurately control the incineration system. A learned model generation device predicts change amount of a furnace interior temperature of a combustion furnace in an incineration system. The system is similar to the system of KR102619347 (B1) but uses an imaging system to classify incoming waste in terms of its calorific value. Both systems cannot achieve self-optimization when the waste properties are unknown.

**Summary**

There is therefore a need to improve the prior art systems in that a higher degree of flexibility is achieved for optimizing a stream processing method without any human interaction with regard to stream samples whose properties are unknown when entering the stream processing method. This is achieved by a computer-implemented method, a computer program product and a computer system as described by the independent claims.

The computer-implemented method is provided for evaluating at least one property of a physical stream sample. The at least one property is a relevant parameter for optimization of a stream sample processing method. The stream sample processing method is processing said stream sample while continuously moving through a process system or continuous flow system which transforms the incoming stream sample into a different state. Examples of a stream sample can include waste material, waste water, etc. In some examples, a stream sample comprises a mix of materials which is processed according to a particular recipe. Thereby, the initial stream sample and its properties are unknown at the beginning of the stream processing method. When the processing of the stream sample starts, an image sensor captures images of the incoming stream sample. Such images representing the initial state of the stream sample are referred to as initial state images herein. In case of large amounts of material in a stream sample, multiple initial state images may be captured and tagged such that these images are associated with the same sample source.

An initial state image is the received by a computer system which is adapted to execute the herein disclosed computer-implemented method. The initial state image is characteristic for at least one property of said stream sample at the beginning of the stream sample processing method. For example, in case of a stream of waste material, the image of the received material is somehow related to a calorific value of the waste. This calorific value is however unknown at the time of receiving said initial state image. In general, properties of the physical real-world sample can be of any of the following types: physical, chemical, biological, mechanical or sensory characteristics of said sample.

The system uses a respectively pre-trained neural network to determine, based on the initial state image, a sample type with a corresponding confidence value for said stream sample (e.g., household waste with a confidence of 80%). In one implementation, the neural network is a classification neural network and the sample type is determined according to predefined sample type classes associated with said stream sample. In another implementation, the neural network is a regression neural network and the sample type is determined as regression value.

The system further uses a sequential probabilistic model of the stream sample processing method. Advantageously, the sequential probabilistic model describes the processing method as a sequence of possible events in which the probability of each event depends on the state attained in the previous event. For example, the sequential probabilistic model can be a State-Space Model or a Markov chain in which the probability of each event depends only on the state attained in the previous event. Based on the sample type, the probabilistic model predicts at least one target property value of the stream sample (e.g., the calorific value of the household waste or required temperature of combustion chamber). Further, the probabilistic model is conditioned on one or more observable control parameters which control the stream sample processing method (e.g., waste processing) in accordance with the at least one property target value. The control parameters are retrieved from the system (processing means) which performs the stream processing method. Based on such control parameters, conditional probabilities of the probabilistic model having an impact on the at least one target property value can be generated.

The at least one property target value is then written into a sample specific data structure. The data structure may be an integral part of the computer system or it may be a remote system which is communicatively coupled with the computer system. In one implementation, the sample specific data structure may be a sample specific blockchain. Using a blockchain ensures that any modification to the sample specific data set stored in the blockchain is traceable in a reliable, secure and transparent manner.

The one or more control parameters for controlling the stream sample processing method are provided to respective control components used for controlling the stream processing method. For example, control parameters can control cranes or robots which are used to change the mix of materials in said stream sample during its processing.

At the end of the sample processing method (i.e., after the stream sample has been processed), a measuring result is received for at least one actual property value of the processed stream sample. The at least one actual property value relates to the at least one predicted target property value. For example, if the target property value is a predicted calorific value of the initial stream sample, at the end of the stream processing, one or more sensors obtain data from the processed stream sample (whose state is different from the initial state) which are suitable for determining the actual calorific value of the processed stream sample.

The one or more actual property values are then mapped backwards through the sequential probabilistic model to the corresponding initial state image. For example, a back-path-operation object may be generated which incorporating details like timestamp, processing cell unit, probability, calorific value, and learning rate. Once the actual property value(s) are mapped backwards through the probabilistic model, they are associated with the respective initial state image. The at least one actual property value is then written to the sample specific data structure as new entry. Finally, the system updates the sequential probabilistic model or the neural network or both - the sequential probabilistic model and the neural network.

Updating the sequential probabilistic model includes updating conditional probability distributions of the sequential probabilistic model based on the at least one actual property value taking into account uncertainties in the sample processing method. Updating the neural network comprises initiating automatic re-training of the neural network with additional training data for adjusting the weights of the neural network. Thereby, the additional training data are pairs of initial state images and respective actual property values collected from earlier stream samples of the determined sample type. For example, for the mapped initial state image (e.g., image of incoming household waste), the respective actual property value is associated with a label value representing the ground truth for a retraining of the neural network.

An automatic re-training of the neural network may be initiated in case the number of collected training data pairs exceeds a predefined threshold.

Updating may depend on the confidence value provided by the neural network for the determined sample type. For example, in case the confidence value is below a predefined minimum threshold, only the neural network is updated. In case the confidence value is above a predefined maximum threshold, only the sequential probabilistic model is updated. In case the confidence value is in a range from the predefined minimum threshold to the predefined maximum threshold, the neural network and the sequential probabilistic model are updated.

In one embodiment, a computer program product is provided for evaluating at least one property of a physical stream sample. The computer program product comprises computer-readable instructions that can be loaded into a memory of a computing device and executed by one or more processors of said computing device. The computer instructions, when being executed by said processors, cause the computing device to perform the herein disclosed computer-implemented method.

In one embodiment, a computer system is provided for evaluating at least one property of a physical stream sample. The computer system has functional modules implemented by software modules which are adapted to perform the herein disclosed computer-implemented method at runtime. In more detail, the at least one property is a relevant parameter for optimization of a stream sample processing method, wherein the stream sample continuously moves through said stream sample processing method.

The system has a first interface adapted for receiving an initial state image being characteristic for the at least one property of said stream sample at the beginning of the stream sample processing method.

Further, a respectively pre-trained neural network of the system is adapted to determine, based on the initial state image, a sample type with a corresponding confidence value (CV1) for said stream sample. The neural network may be a classification neural network which determines the sample type to predefined sample type classes associated with said stream sample. Alternatively, the neural network may be a regression neural network which determines the sample type as regression value.

Further, the system has a sequential probabilistic model of the stream sample processing method adapted to predict, based on the sample type, at least one target property value of the stream sample. The probabilistic model is conditioned on one or more observable control parameters which control the stream sample processing method. In the previously mentioned example of a waste processing method, the conditional probabilities of the probabilistic model can be conditioned on the crane positions which change during the movement of a respective crane. Thereby, the crane positions are observable control parameters.

A second interface of the system is adapted to write the at least one property target value into a sample specific data structure, and to provide the one or more control parameters (e.g., retrieved crane parameters) for controlling the stream sample processing method.

A third interface of the system is adapted to receive, a measuring result for at least one actual property value of the processed stream sample at the end of the sample processing method. The at least one actual property value relates to the at least one predicted target property value.

A mapper module of the system is adapted to map the at least one actual property value backwards through the sequential probabilistic model to the corresponding initial state image.

The second interface is further adapted to write the at least one actual property value as new entry to the sample specific data structure.

An updater module of the system is adapted to update the sequential probabilistic model or the neural network or both. Thereby, updating the sequential probabilistic model comprises updating conditional probability distributions of the sequential probabilistic model based on the at least one actual property value taking into account uncertainties in the sample processing method. Updating the neural network comprises initiating automatic re-training of the neural network with additional training data for adjusting the weights of the neural network, wherein the additional training data are pairs of initial state images and respective actual property values collected from earlier stream samples of the determined sample type.

The updater module may be adapted to initiate automatic re-training of the neural network in case the number of collected training data pairs exceeds a predefined threshold. Further, the updater module may depend on the confidence value provided by the neural network for the determined sample type in that:

- In case the confidence value is below a predefined minimum threshold, only the neural network is updated;
- In case the confidence value is above a predefined maximum threshold, only the sequential probabilistic model is updated; and
- In case the confidence value is in a range from the predefined minimum threshold to the predefined maximum threshold, the neural network and the sequential probabilistic model are updated.

Further aspects of the invention will be realized and attained by means of the elements and combinations particularly depicted in the appended claims.

**Short description of the figures**

FIG. 1 shows a block diagram of a computer system for evaluating at least one property of a physical stream sample in accordance with an embodiment;
FIG. 2 is a simplified flowchart of a computer-implemented method for evaluating at least one property of a physical stream sample in accordance with an embodiment;
FIG. 3 is a simplified illustration of an embodiment of a waste example scenario with a stream processing method adapted to process incoming waste units;

FIG. 4A illustrates pseudo code for an algorithm to update model states based on actual values obtained from true measurements according to an example embodiment;

FIG. 4B illustrates pseudo code for an algorithm to retrain models according to an example embodiment; and

FIG. 5 is a diagram that shows an example of a generic computer device and a generic mobile computer device, which may be used with the techniques described herein.

## Detailed description

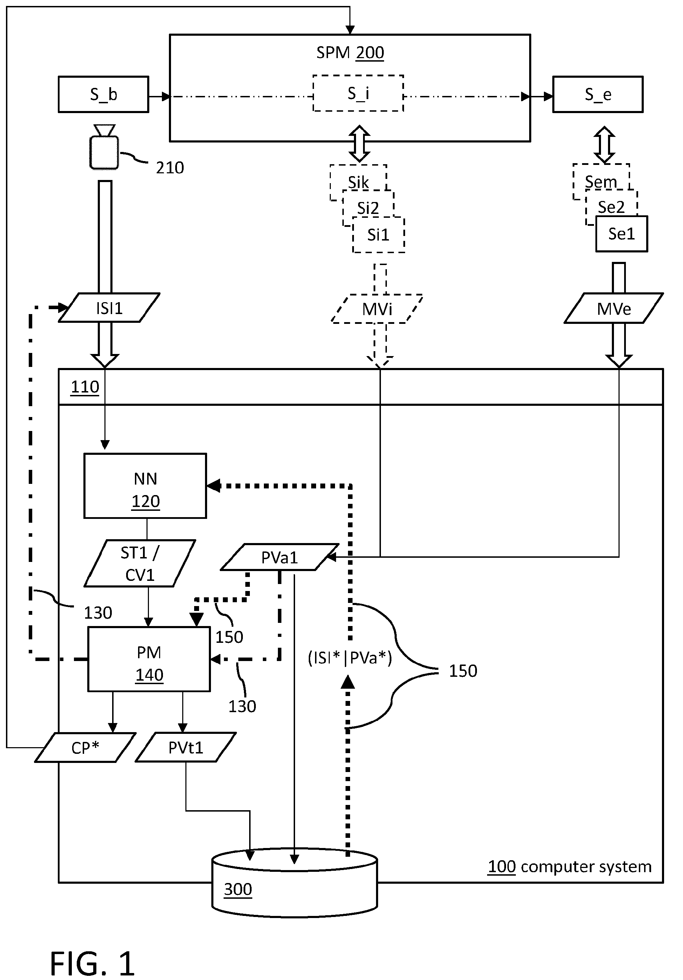

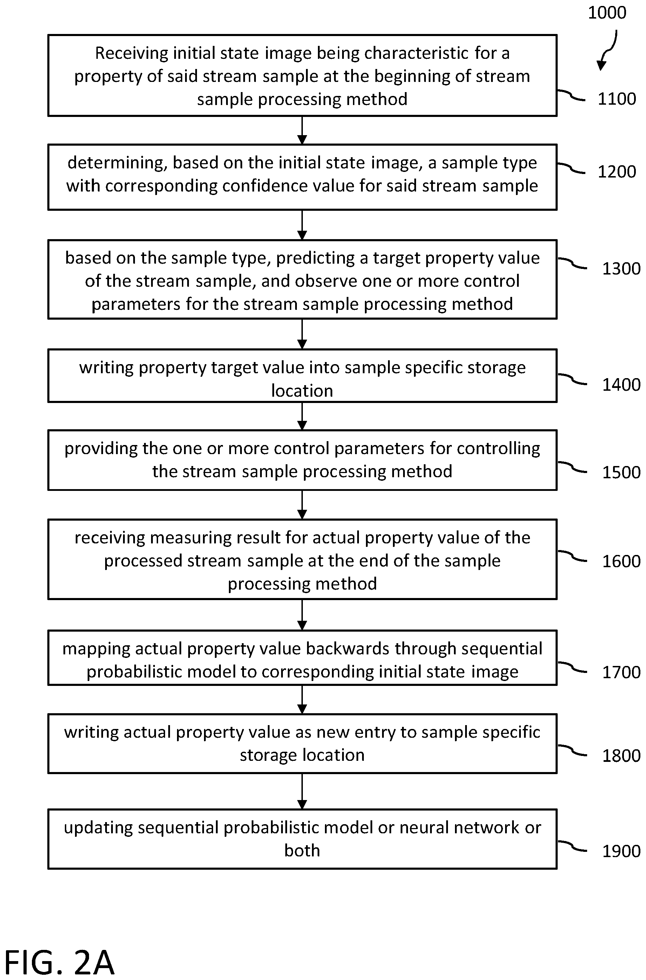

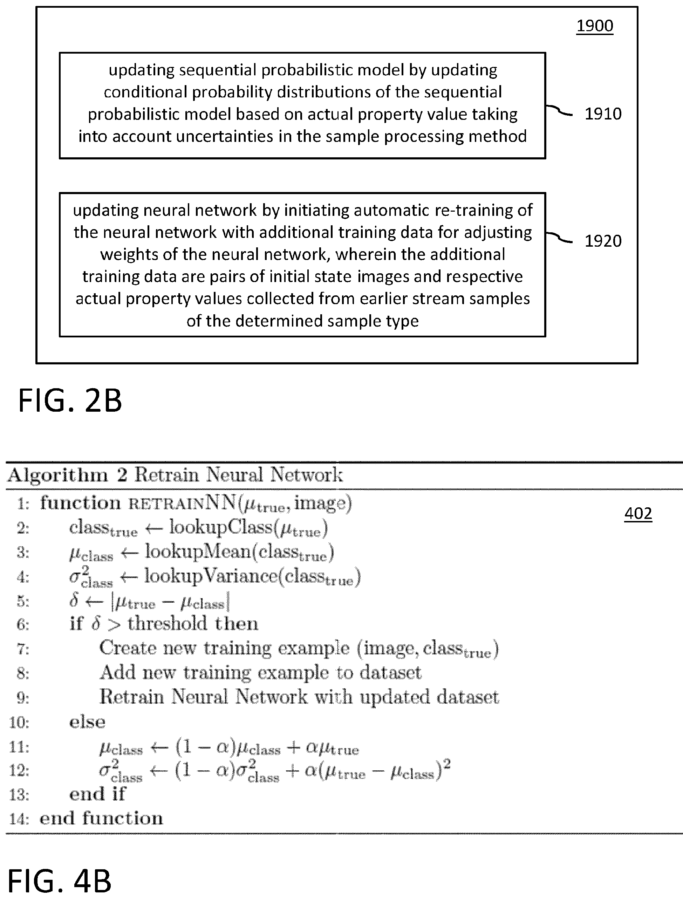

FIG. 1 shows a block diagram of an example embodiment of a computer system 100 for evaluating at least one property of a physical stream sample. FIG. 2 is a simplified flowchart of an exemplary computer-implemented method 1000 for evaluating at least one property of said physical stream sample. Method 1000 may be executed by system 100. Therefore, the following description of the system 100 in FIG. 1 is provided in view of the method 1000 of FIG. 2 and reference numbers of both figures are referred to.

The example discussed in detail in the following is based on a scenario where the stream sample consists of waste wherein the incoming waste can be of different waste types. A person skilled in the art is able to transfer the disclosure of the herein discussed waste example to other domains (i.e., other stream sample types). For example, the stream sample may be waste water, chemical effluent, air pollution, slurry, liquid waste. However, the herein disclosed conceptual approach is applicable to any physical stream sample processed by processing means which can perform respective stream sample processing methods. In the example, an incoming stream sample S_b is received in its original state as an input to stream sample processing method (SPM) 200. The stream sample continuously moves through SMP 200 while being processed. The physical stream sample has one or more properties with at least one property being a relevant parameter for optimization. In the waste example, the received stream sample is associated with a respective calorific value. SPM 200 can be adapted to optimize this calorific value. For this purpose, the incoming waste S_b may be received, e.g., in a so-called waste bunker, and is then moved through a respective waste processing apparatus which is adapted to process the waste and eventually transform the originally received stream sample S_b into one or more transformed states (stream sample(s) S_i). The goal of this processing may be an increased calorific value of the stream sample S_e at the end of SPM 200.

An image sensor 210 (e.g., a RGB camera) is placed such that the sensor 210 captures an initial state image ISI1 of the received stream sample S_b before being processed. This initial state image is characteristic for the at least one property of the stream sample S_b in its original state (i.e., before being processed by SPM 200). For example, a camera sensor may be mounted above the location where the incoming waste is unloaded, and can capture initial state images of the incoming waste from a bird's eye view. System 100 is communicatively coupled with image sensor 210 via a first interface 110 which is adapted to receive 1100 the initial state image ISI1 from sensor 210.

In a real-world waste processing method, waste of the same type is typically delivered by a plurality of trucks which may even arrive at different gates. In this scenario, multiple initial state images captured at respective gates (gate images) with the same type of waste delivered by different trucks may be assigned by system 100 to a common "unloaded object" until the last truck of the plurality of trucks has been unloaded.

System 100 has a pre-trained neural network (NN) 120 adapted to determine 1200, based on a particular received initial state image ISI1, a sample type ST1 with a corresponding confidence value CV1 for said stream sample S_b. In the example, each gate image is classified by NN 120. NN 120 can be pre-trained by using an expert-labeled initial training set such that each gate Image is classified into, for example, five waste classes (e.g., household waste, waste wood, scrap metal, packaging waste, construction waste). The neural network may be implemented as a classification neural network. The sample type is then determined according to predefined sample type classes associated with said stream sample. The sample type classes may be text strings (e.g., household waste, construction waste, etc.) but can also be numerical values (e.g., '1' for household waste, '2' for construction waste, etc.). In an alternative implementation, the neural network may be a regression neural network and the sample type is determined as regression value. In this implementation, a sample type may be associated with an interval of regression values (e.g., [0.50|1.49] for household waste, [1.50|2.49] for construction waste, etc.)

In the multiple truck scenario, the class of the whole truckload (i.e., an overall class of the multiple truck loads) can be determined by the system using a majority vote.

In the multi-truck example, each truckload classification may create a new waste unit. In other words, each truckload can be considered as a new waste unit. The new waste unit is the classified with a respective waste class. In this example, a waste unit corresponds to the stream sample S_b which is moved through the waste processing system, and is defined by the properties of its state. The waste unit has a property "calorific value" with an initial value. The waste unit's calorific value may be modeled as a Gaussian distribution: $N(\mu, \sigma^2)$ where $\mu$ is the mean calorific value estimated indirectly by the waste class, and $\sigma^2$ is the variance.

The output of NN 120 - the determined waste class value ST1 in the example - is provided to a sequential probabilistic model (PM) 140 of the stream sample processing method 200. SPM 140 of system 100 is adapted to predict 1300, based on the sample type ST1, at least one target property value PVt1 of the stream sample, and observe one or more control parameters CP* controlling the stream sample processing method 200 in accordance with the at least one property target value PVt1. In the example, each class is associated with a calorific value Ci assigned to it by experts. For example, this value can be the mean of a Gaussian distribution. It is assumed that the determined waste class value corresponds to the sample type household waste. PM 140 may translate the sample type ST1 into a Gaussian distribution with a predefined mean value for the initial calorific value as characteristic property value associated with the respective initial state image ISI1. System 100 writes 1400 the at least one property target value PVt1 into a sample specific data structure 300, and provides 1500 the one or more control parameters CP* for controlling the stream sample processing method 200. System 100 may use a second interface (not shown) adapted to communicate with control elements of SPM 200 and the sample specific data structure 300. The second interface may also be the same as the first interface 110. The data structure 300 may be an integrated component of system 100 or it may be a remote data structure accessible by system 100. In the example scenario, control parameters CP* may include instructions for executing pick and drop operations by respective cranes during waste processing to achieve the property target value PVt1 (a target calorific value) at the end of SPM 200.

PM 140 can describe the processing method as a sequence of possible events in which the probability of each event depends on the state attained in the previous event. For example, PM 140 can be a Markov chain in which the probability of each event depends only on the state attained in the previous event. In another example as demonstrated in more detail for the waste example scenario, PM 140 may be implemented as a State-Space-Model (SSM) to model a forward path with the waste units' calorific values as hidden states (i.e., states that cannot be directly observed). In this example of the stream sample processing method being be a waste processing method which can be performed by a waste incineration plant, the control parameters can be movements performed by cranes in the plant. The probabilities of the probabilistic model are then conditioned on such crane movements. Thereby, the crane movements can be directly retrieved from the plant. That is, the crane movements are given by the plant and are used to generate the conditional probabilities (of the probabilistic model) which represent which waste units are affected by the crane movements and how they affect respective calorific values. In more detail, in the SSM implementation, each waste unit Wi at time t is characterized by the following state:

- Calorific value mean ($\mu_{i,t}$): The average calorific value of the waste unit i at time t.

- Calorific value variance ($\sigma^2_{i,t}$): The variance of the calorific value of the waste unit i at time t.

- Physical mass in kg ($M_{i,t}$): The physical mass of the waste unit i in kilograms at time t.

- Position ($x_{i,t}$, $_{yi,t}$): The coordinates of the waste unit i within the processing means at time t.

Thereby, the initial state distribution describes the probability P of each waste unit starting in a given state. This probability P is derived from the Neural Network 120 that classifies an image of the waste from the truck into one of for example five predefined classes. Each of these classes has an associated initial mean and variance for the new waste unit's calorific value. NN 120 processes an image from the truck and outputs probabilities for each of the five classes. Each class si has an associated initial mean $\mu_{i,0}$ and variance $\sigma^2_{i,0}$ for the calorific value:

$$P(s_i \mid image) = NN(image)_i$$

Where:

- $NN(image)_i$: The probability output by the Neural Network that the waste unit belongs to class i given the image.

- $\mu_{i,0}$: Initial mean calorific value for class i.

- $\sigma^2_{i,0}$: Initial variance of the calorific value for class i.

After classification, each new waste unit is assigned an initial state $S_{i,0}$ based on the class probabilities:

$$S_{i,0} = (\mu_{i,0}, \sigma^2_{i,0}, M_{i,0}, (x_{i,0}, y_{i,0}))$$

Where:

- $S_{i,0}$: Initial state of waste unit i.

- $\mu_{i,0}$: Initial mean calorific value.

- $\sigma^2_{i,0}$: Initial variance of the calorific value.

- $M_{i,0}$: Initial mass of the waste unit.

- $(x_{i,0}, y_{i,0})$: Initial position of the waste unit.

The crane's pick and drop operations are observable events. The observations include a crane's operations and occasional true measurements. A pick operation is specified by the crane's position (xp, yp) and the amount of weight picked, denoted by Mpick. A drop operation is specified by the crane's position (xd, yd) and the amount of weight dropped, denoted by Mdrop. For example, sensors Si1 to Sik may be associated with respective cranes and provide measurement values MVi (pick, drop, location, weight) which characterize corresponding intermediate states of the stream sample S_i during waste processing. For each pick and drop operation, there is a probability distribution describing how the intermediate state of affected waste units S_i changes, based on the location and weight of a respective crane's sensor. Every pick and drop operation may also be stored in the sample specific data structure 300 (e.g., a blockchain storage) for integrity reasons.

The SSM forward path model allows to track the waste unit S_i through the entire waste-to-energy conversion process via the pick and drop operation as implemented in SPM 200. The following notation is used further down below:

- $\mu_{crane}$: Mean calorific value of the waste being picked or dropped by the crane.

- $\sigma^2_{crane}$: Variance of the calorific value of the waste being picked or dropped by the crane.

- $\mu_{operation}$: Combined mean calorific value after a pick or drop operation.

- $\Sigma_i$: Covariance matrix describing the spread and correlation between $\mu_{i,t+1}$, $\sigma^2_{i,t+1}$, and $M_{i,t+1}$.

- $\mu_{true}$: True mean calorific value obtained from burning the waste unit.

When a crane executes a pick operation and returns the waste that is picked, system 100 tracks the weight of the waste amount in the crane (e.g., measured value MVi). The crane then performs a drop operation and updates the states of the waste units. When different types of waste from different waste units are combined via respective pick and drop operations, the influence of the crane operations on surrounding waste units can be calculated by using a 2D Gaussian distribution model. Thereby, G in formula F1 corresponds to the probability that a waste unit is included in a pick or drop operation:

$$G(x_i, y_i \mid x_c, y_c) = \frac{1}{2\pi\sigma_x\sigma_y} \exp\left(-\frac{1}{2}\left(\frac{(x_i - x_c)^2}{\sigma_x^2} + \frac{(y_i - y_c)^2}{\sigma_y^2}\right)\right)$$

(F1)

Where:

- $(x_i, y_i)$: Coordinates of a waste unit.
- $(x_c, y_c)$: Coordinates of the crane's position.
- $\sigma_x$ and $\sigma_y$: Standard deviations representing the spread of the crane's influence.

The state transition model of the SSM in formula F2 describes how the state of each waste unit evolves over time due to crane operations. For each waste unit $W_i$, the state transition due to a pick operation can be modeled as follows:

$$S_{i,t+1} \mid S_{i,t}, \text{pick} \sim \mathcal{N}\left(\left(\begin{array}{c} \sum_j G(x_j, y_j \mid x_p, y_p)\mu_{j,t} \\ \sum_j G(x_j, y_j \mid x_p, y_p)(\sigma_{j,t}^2 + (\mu_{j,t} - \mu_{\text{pick}})^2) \\ M_{i,t} - G(x_i, y_i \mid x_p, y_p)M_{\text{pick}} \end{array}\right), \Sigma_i\right)$$

(F2)

Where:

- $\Sigma_j G(x_j, y_j \mid x_p, y_p)\mu_{j,t}$: The linear combination of the mean calorific values of all affected waste units j.
- $\Sigma_j G(x_j, y_j \mid x_p, y_p)(\sigma^2_{j,t} + (\mu_{j,t} - \mu_{pick})^2)$ : The linear combination of the variances of all affected waste units j.
- $G(x_j, y_j \mid x_p, y_p)M_{pick}$: The Gaussian influence factor for the pick operation centered at $(x_p, y_p)$.
- $\Sigma_i$: Covariance matrix for waste unit i.

For each waste unit $W_i$, the state transition due to a drop operation can be modeled as described in formula F3:

$$\mathbf{S}_{i,t+1} \mid \mathbf{S}_{i,t}, \mathrm{drop} \sim \mathcal{N}\left( \begin{pmatrix} \sum_j G(x_j, y_j \mid x_d, y_d)\mu_{j,t} \\ \sum_j G(x_j, y_j \mid x_d, y_d)(\sigma^2_{j,t} + (\mu_{j,t} - \mu_{\mathrm{drop}})^2) \\ M_{i,t} + G(x_i, y_i \mid x_d, y_d)M_{\mathrm{drop}} \end{pmatrix}, \Sigma_i \right) \quad \text{(F3)}$$

Where:

- $\Sigma_j G(x_j, y_j \mid x_d, y_d)\mu_{j,t}$: The linear combination of the mean calorific values of all affected waste units j.
- $\Sigma_j G(x_j, y_j \mid x_d, y_d)(\sigma^2_{j,t} + (\mu_{j,t} - \mu_{drop})^2)$: The linear combination of the variances of all affected waste units j.
- $G(x_j, y_j \mid x_d, y_d)M_{drop}$: The Gaussian influence factor for the pick operation centered at $(x_d, y_d)$.
- $\Sigma_i$: Covariance matrix for waste unit i.

It is to be noted that the state of the system in the SSM at time t is the collection of states of all individual waste units: St = {$S_{i,t}$ | i = 1, ... ,N}, where N is the total number of waste units.

At the end of SPM 200, one or more further sensors Se1 to Sem are used to obtain one or more measuring results MVe for at least one actual property value PVa1 of the now processed stream sample S_e. The measuring result(s) MVe characterizes the final state of the stream sample S_e. Thereby, the at least one actual property value PVa1 relates to the at least one predicted target property value PVt1. In other words, actual property value and target property value are comparable. In the waste example scenario, the actual property value is the calorific value which can be derived from the energy output of a waste incineration plant at the final stage of SPM 200. The calorific value C is calculated as: C = E/m where E is the measured energy output and m is the measured mass of the waste. That is, the true calorific value measurement of a waste unit when it gets burned during the burning process also belongs to the observations of the SSM. System 100 receives 1600 such measuring results MVe and determines the actual calorific value PVa1. The measuring result is received via a third interface (not shown) which can also be the same as the first interface 110. The at least one actual property value PVa1 is then written 1800 as new entry to the sample specific data structure 300. At this stage, sample specific data structure 300 has a record history characterizing the incoming waste unit S_b, the intermediate waste unit(s) S_i and the final waste unit S_e where all intermediate steps to get from S_b to S_e are modeled by PM (SSM) 140.

A mapper module 130 (illustrated by dash dotted arrows) maps 1700 the at least one actual property value PVa1 backwards through the sequential probabilistic model 140 to the corresponding initial state image ISI1. By tracking the pick and drop operations for each waste unit, the waste units in the hopper (of the waste incinerator), which contributed to the measured energy output, can be identified. For each waste unit, the sequence of pick and drop operations can be reversed to find the state sequence z = (s1, s2, ..., sT), that is most likely to produce the actual target value, by using an iterative Kalman gain algorithm, as illustrated in FIG., 4A. This allows to map the actual property values from the hopper back to the initial state images of the initial waste units.

When a waste unit is burned, its true calorific value mean, $\mu_{true}$ is obtained. This information is used to update the states of the affected waste units, thereby improving the estimates of their respective states. This process involves smoothing, where past states are adjusted based on the new information to maximize the likelihood of the observed outcome. Thereby, states are updated based on the true measurements (actual measurement values).

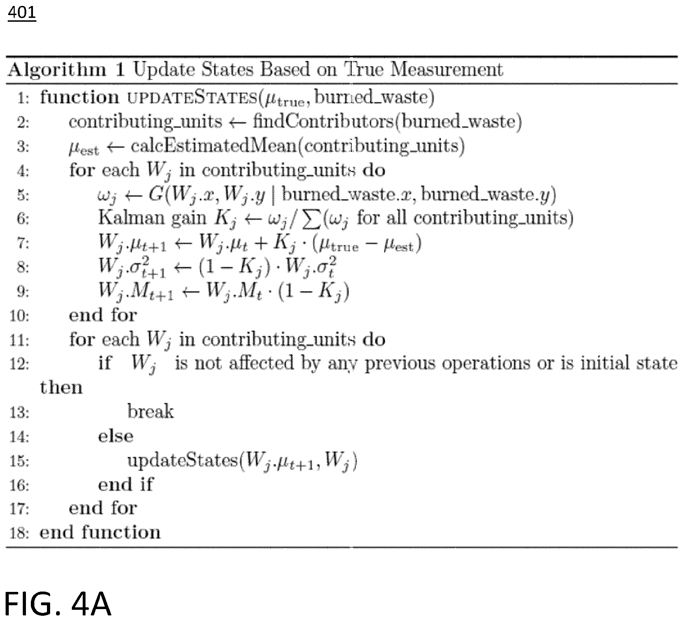

The algorithm 1 in FIG. 4A illustrates in pseudo code 401 how such updates are achieved. Given a true (actual) measurement $\mu_{true}$ from burning a waste unit, the affected waste units' states are updated iteratively, starting from the time they were created (e.g., when new trash is unloaded by trucks). The weight/proportion of each contributing waste unit in the final burned waste unit is calculated using the 2D Gaussian distribution (cf. above description for the Gaussian Influence Calculation).

Where:

- $\mu_{true}$: True calorific value obtained from burning the waste unit.

- burned waste: The waste unit that has been burned.

- contributing units: The waste units that contributed to the burned waste unit.

- $\mu_{est}$: Estimated mean calorific value of the contributing waste units.

- $\omega_j$ : The weight/proportion of waste unit j in the final burned waste unit, calculated using the 2D Gaussian distribution centered at the crane's position.

- $K_j$ : Kalman gain, which determines the weight given to the new measurement.

- $W_{j,\mu t+1}$: Updated mean calorific value of waste unit j.

- $W_{j,\sigma^2 t+1}$: Updated variance of the calorific value of waste unit j.

- $W_j.M_{t+1}$: Updated mass of waste unit j.

An updater module 150 (illustrated by dotted arrows) of system 100 finally updates 1900 the sequential probabilistic model 140 or the neural network 120 or both. The decision of what to update can depend on the confidence value CV1 provided by NN 120 for the determined sample type ST1 or can be based on the discrepancy between estimated and actual target value. For example, in case the confidence value is below a predefined minimum threshold, only the neural network may be updated. In case the confidence value is above a predefined maximum threshold, only the sequential probabilistic model may be updated. In case the confidence value is in a range from the predefined minimum threshold to the predefined maximum threshold, the neural network and the sequential probabilistic model may be updated.

FIG. 4B illustrates pseudo code 402 for an algorithm 2 which implements the above updating approach including the retraining the neural network. One aim of algorithm 2 is to improve the accuracy of the Neural Network, wherein the update is based on the true calorific values obtained through the iterative Kalman gain smoothing process. If the discrepancy between the estimated mean calorific value corresponding to the sample type ST1 provided by the Neural Network and the updated value is above a certain threshold, a new training dataset for retraining is created. For example, a lookup table may be used to retrieve such mean value which corresponds to the respective sample type. If it is below the threshold, the associated initial mean and variance is adjusted for the respective class.

Where:

- $\mu_{true}$: True calorific value obtained from the final state update.

- $class_{true}$: The class corresponding to the true calorific value.

- $\mu_{class}$: Mean calorific value for the respective class, looked up from a table.

- $\sigma^2_{class}$: Variance for the respective class, looked up from a table.

- image: Image of the waste unit used for classification.

- threshold: The threshold value for determining whether to retrain the Neural Network.

- $\alpha$: Learning rate, an optional parameter set externally, typically between 0 and 1.

If the discrepancy $\delta$ is below the threshold, the class parameters can be updated using a fixed learning rate $\alpha$ as follows:

- Update the class mean: $\mu_{class} \leftarrow (1 - \alpha)\mu_{class} + \alpha\mu_{true}$

- Update the class variance: $\sigma^2_{class} \leftarrow (1 - \alpha)\sigma^2_{class} + \alpha(\mu_{true} - \mu_{class})^2$

The updater 150 may further apply predefined restrictions to ensure accuracy of the adjustment (e.g., a waste unit can never be off by more than 2000 kcal). Such predefined restrictions are typically set by experts in the respective application field of SPM 200.

The updater may also update surrounding waste units (cf., row 2 in algorithm 1 of FIG. 4A). A surrounding waste unit is a waste unit which is in physical proximity to a previously processed waste unit. Thereby, the surrounding waste units are iteratively updated in the crane operation's location using the probability of being picked or dropped as described by the 2D Gaussian Distribution for Crane Influence of formula F1.

The entire SPM 200 can thus be traced back to the initial waste units (e.g., truck loads received at respective gates) and update the corresponding gate images with new labels. Thereby, a new dataset with updated labels and gate images of the initial waste units is created which can serve as additional training data for NN 120.

Once the number of such additional training data pairs exceeds a predefined threshold, the updater module 140 can initiate automatic re-training of NN 120 and thereby update weights of the NN model, for example, in accordance with algorithm 2 in FIG. 4B.

In other words, when updating 1920 NN 120, the updater module 150 initiates automatic re-training of the neural network with additional training data (ISI*|PVa*) for adjusting the weights of the neural network. Thereby, the additional training data are pairs of initial state images ISI* and respective actual property values PVa* (waste types associated with the actual calorific values) collected from earlier stream samples of the determined sample type ST1.

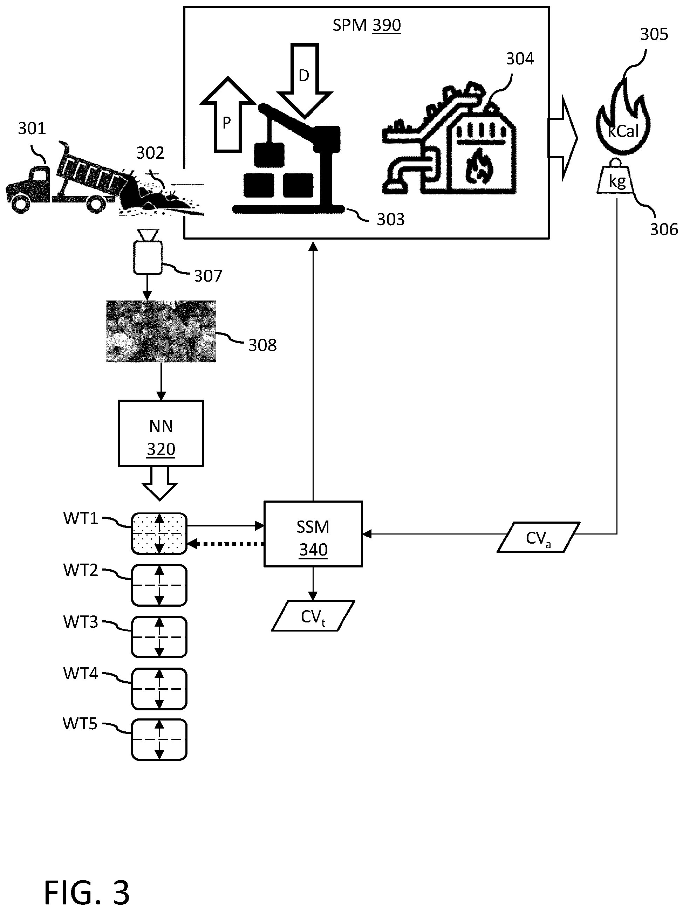

FIG. 3 is a simplified illustration of an embodiment of the waste example scenario with a stream processing method SPM 390 adapted to process an incoming waste unit 302 (delivered by truck 301) by applying to the incoming waste unit pick operations P and drop operations D via crane 303, and finally burning the processed waste unit in a waste incineration unit 304 where the energy output 305 and the mass of the processed waste unit are provided as measurement results to determine the actual calorific value $CV_a$ of the processed waste unit.

Camera sensor 307 captures the initial state image 308 of the incoming waste unit 302 which is provided to pretrained neural network NN 320 to classify image 308 by waste types WT1 to WT5. In the example, NN 320 is a regression neural network where the outputs are numerical values. Each waste type is associated with an interval of output values (illustrated by a pair of up- and down-arrows) and a mean value (illustrated by a dashed horizontal line) representing the calorific value associated with the respective waste type. In the example, image 308 is classified as WT1 (indicated by dotted background pattern).

Based on waste type WT1, the sequential probabilistic model SSM 340 predicts a target calorific value $CV_t$ for waste unit 302 at the end of SPM 390 processing. After SPM 390 processing, the actual calorific value $CV_a$ for the processed waste unit is processed backwards by SSM 340 as described in detail above. As a result, the output (regression) value for the waste type WT1 determined for image 308 can be adjusted in accordance with the actual calorific value $CV_a$. The adjusted output value is the ground truth of a new training data pair (adjusted output|image 308) for retraining NN 320.

It is to be noted, that the herein disclosed approach is entirely self-controlled. No manual adjustments by any operator needs to made. The system automatically adapts to any changes applied during the stream sample processing as these changes are affecting the measured actual property values. The actual property values are then mapped back to the initial state image of the respective incoming stream sample through a backward path of the probabilistic model. The probabilistic model and the neural network are then automatically adjusted to match the actual property values for the processed stream sample. After such adjustment, which may include the retraining of the neural network, a newly received stream sample which may be very similar to an earlier received stream sample, can be classified into a sample type which is different from the sample type determined for the earlier received stream sample.

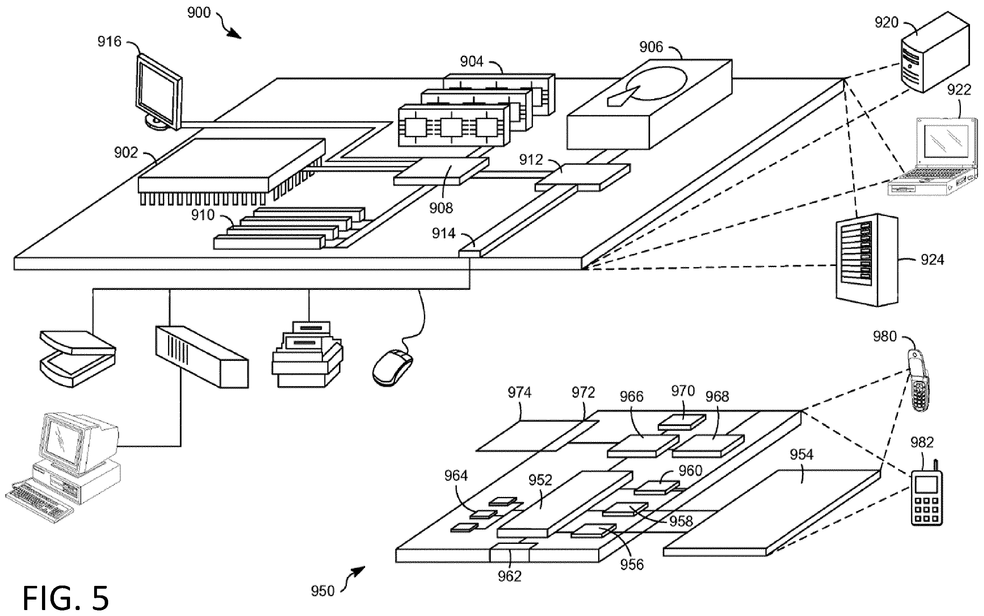

FIG. 5 is a diagram that shows an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Generic computer device 900 may correspond to the computer system 100 of FIG. 1. Computing device 950 is intended to represent various forms of mobile devices, such as personal digital assistants, cellular telephones, smart phones, and other similar computing devices. For example, computing device 950 may include the data storage components and/or processing components of agent devices as shown in FIG. 1. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid-state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high-speed controller 908 manages bandwidth-intensive operations for the computing device 900, while the low-speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provided in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In-Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952, that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship with each other.

**Claims**

1. A computer-implemented method (1000) for evaluating at least one property of a physical stream sample, wherein the at least one property is a relevant parameter for optimization of a stream sample processing method, wherein the stream sample moves through processing means performing said stream sample processing method, the computer-implemented method comprising:

   receiving (1100) an initial state image (ISI1) being characteristic for the at least one property of said stream sample (S_b) at the beginning of the stream sample processing method (200);
   by a respectively pre-trained neural network (120), determining (1200), based on the initial state image (ISI), a sample type (ST1) with a corresponding confidence value (CV1) for said stream sample (S_b);
   based on the sample type (ST1), predicting (1300), by a sequential probabilistic model (140) of the stream sample processing method, at least one target property value (PVt1) of the stream sample, wherein the probabilistic model is conditioned on one or more control parameters which control the stream sample processing method, wherein the one or more control parameters are retrieved from the processing means which perform the stream processing method;

writing (1400) the at least one property target value (PVt1) into a sample specific data structure (300), and providing (1500) the one or more control parameters (CP*) for controlling the stream sample processing method (200);

receiving (1600) a measuring result (MVe) for at least one actual property value (PVa1) of the processed stream sample (S_e) at the end of the sample processing method (200), wherein the at least one actual property value (PVa1) relates to the at least one predicted target property value (PVt1);

mapping (1700) the at least one actual property value (PVa1) backwards through the sequential probabilistic model (140) to the corresponding initial state image (ISI1), and writing (1800) the at least one actual property value (PVa1) as new entry to the sample specific data structure (300);

updating (1900) the sequential probabilistic model (140) or the neural network (120) or both, wherein:

updating (1910) the sequential probabilistic model (140) comprises updating conditional probability distributions of the sequential probabilistic model (140) based on the at least one actual property value taking into account uncertainties in the sample processing method (200); and

updating (1920) the neural network (120) comprises initiating automatic retraining of the neural network with additional training data (ISI*|PVa*) for adjusting the weights of the neural network, wherein the additional training data are pairs of initial state images (ISI*) and respective actual property values (PVa*) collected from earlier stream samples of the determined sample type (ST1).

2. The method of any of claim 1, wherein the sequential probabilistic model (140) describes the processing method as a sequence of possible events in which the probability of each event depends on the state attained in the previous event.

3. The method of any of the previous claims, wherein the sequential probabilistic model (140) is a Markov chain in which the probability of each event depends only on the state attained in the previous event.

4. The method of any of the previous claims, wherein the sample specific data structure is a sample specific blockchain.

5. The method of any of the previous claims, wherein properties of the physical real-world sample comprise one or more of: physical, chemical, biological, mechanical or sensory characteristics of said sample.

6. The method of any of the previous claims, wherein, in case the neural network is a classification neural network, the sample type is determined according to predefined sample type classes associated with said stream sample, or, in case the neural network is a regression neural network, the sample type is determined as regression value.

7. The method of any of the previous claims, wherein automatic re-training of the neural network is initiated in case the number of collected training data pairs exceeds a predefined threshold.

8. The method of any of the previous claims, wherein updating depends on the confidence value provided by the neural network for the determined sample type, **characterized in that**:

In case the confidence value is below a predefined minimum threshold, only the neural network is updated;
In case the confidence value is above a predefined maximum threshold, only the sequential probabilistic model is updated; and
In case the confidence value is in a range from the predefined minimum threshold to the predefined maximum threshold, the neural network and the sequential probabilistic model are updated.

9. A computer program product that, when loaded into a memory of a computing device and executed by at least one processor of the computing device, executes the steps of the computer-implemented method according to any one of the previous claims.

10. A computer system (100) for evaluating at least one property of a physical stream sample, wherein the at least one property is a relevant parameter for optimization of a stream sample processing method (200), wherein the stream sample continuously moves through said stream sample processing method, the system comprising:

a first interface adapted for receiving an initial state image (ISI1) being characteristic for the at least one property of said stream sample (S_b) at the beginning of the stream sample processing method (200);
a respectively pre-trained neural network (120) adapted to determine, based on the initial state image (ISI), a sample type (ST1) with a corresponding confidence value (CV1) for said stream sample (S_b);

a sequential probabilistic model (140) of the stream sample processing method adapted to predict, based on the sample type (ST1), at least one target property value (PVt1) of the stream sample, wherein the probabilistic model is conditioned on one or more control parameters which control the stream sample processing method, wherein the one or more control parameters are retrieved from processing means which perform the stream processing method;

a second interface adapted to write the at least one property target value (PVt1) into a sample specific data structure (300), and to provide the one or more control parameters (CP*) for controlling the stream sample processing method (200);

a third interface adapted to receive, a measuring result (MVe) for at least one actual property value (PVa1) of the processed stream sample (S_e) at the end of the sample processing method (200), wherein the at least one actual property value (PVa1) relates to the at least one predicted target property value (PVt1);

a mapper module (130) adapted to map the at least one actual property value (PVa1) backwards through the sequential probabilistic model (140) to the corresponding initial state image (ISI1);

the second interface further adapted to write the at least one actual property value (PVa1) as new entry to the sample specific data structure (300); and

and an updater module (150) adapted to update the sequential probabilistic model (140) or the neural network (120) or both, wherein:

updating the sequential probabilistic model (140) comprises updating conditional probability distributions of the sequential probabilistic model (140) based on the at least one actual property value (PVa1) taking into account uncertainties in the sample processing method (200); and

updating the neural network (120) comprises initiating automatic re-training of the neural network with additional training data (ISI*|PVa*) for adjusting the weights of the neural network, wherein the additional training data are pairs of initial state images (ISI*) and respective actual property values (PVa*) collected from earlier stream samples of the determined sample type (ST1).

11. The system of claim 10, wherein the sequential probabilistic model (140) describes the processing method as a sequence of possible events in which the probability of each event depends on the state attained in the previous event.

12. The system of claim 10 or 11, wherein the sequential probabilistic model (140) is a Markov chain in which the probability of each event depends only on the state attained in the previous event.

13. The system of any of claims 10 to 12, wherein, in case the neural network is a classification neural network, the sample type is determined according to predefined sample type classes associated with said stream sample, or, in case the neural network is a regression neural network, the sample type is determined as regression value.

14. The system of any of claims 10 to 13, wherein the updater module (140) is adapted to initiate automatic re-training of the neural network in case the number of collected training data pairs exceeds a predefined threshold.

15. The system of any of claims 10 to 14, wherein the updater module (160) depends on the confidence value provided by the neural network for the determined sample type, **characterized in that**:

In case the confidence value is below a predefined minimum threshold, only the neural network is updated;

In case the confidence value is above a predefined maximum threshold, only the sequential probabilistic model is updated; and

In case the confidence value is in a range from the predefined minimum threshold to the predefined maximum threshold, the neural network and the sequential probabilistic model are updated.

## Patentansprüche

1. Ein computerimplementiertes Verfahren (1000) zur Bewertung mindestens einer Eigenschaft einer physikalischen Stream-Probe, wobei die mindestens eine Eigenschaft ein relevanter Parameter für die Optimierung eines Stream-Probenverarbeitungsverfahrens ist, wobei die Stream-Probe durch Verarbeitungsmittel läuft, die das genannte Stream-Probenverarbeitungsverfahren ausführen, wobei das computerimplementierte Verfahren umfasst:

Empfangen (1100) eines Anfangszustandsbildes (ISI1), das für die mindestens eine Eigenschaft der Stream-Probe (S_b) zu Beginn des Stream-Probenverarbeitungsverfahrens (200) charakteristisch ist;

Bestimmen (1200) eines Probentyps (ST1) mit einem entsprechenden Konfidenzwert (CV1) für die Stream-Probe (S_b) auf der Grundlage des Anfangszustandsbildes (ISI) durch ein entsprechend vortrainiertes neuronales Netzwerk (120);

auf der Grundlage des Probentyps (ST1), Vorhersagen (1300) durch ein sequentielles probabilistisches Modell (140) des Stream-Probenverarbeitungsverfahrens mindestens eines Ziel-Eigenschaftswerts (PVt1) der Stream-Probe, wobei das probabilistische Modell von einem oder mehreren Steuerparametern abhängig ist, die das Stream-Probenverarbeitungsverfahren steuern, wobei der eine oder die mehreren Steuerparameter von den Verarbeitungsmitteln abgerufen werden, die das Stream-Probenverarbeitungsverfahren ausführen;

Schreiben (1400) des mindestens einen Eigenschaftszielwerts (PVt1) in eine probenspezifische Datenstruktur (300) und Bereitstellen (1500) des einen oder der mehreren Steuerparameter (CP*) zur Steuerung des Stream-Probenverarbeitungsverfahrens (200);

Empfangen (1600) eines Messergebnisses (MVe) für mindestens einen tatsächlichen Eigenschaftswert (PVa1) der verarbeiteten Stream-Probe (S_e) am Ende des Stream-Probenverarbeitungsverfahrens (200), wobei sich der mindestens eine tatsächliche Eigenschaftswert (PVa1) auf den mindestens einen vorhergesagten Ziel-Eigenschaftswert (PVt1) bezieht;

Abbilden (1700) des mindestens einen tatsächlichen Eigenschaftswerts (PVa1) rückwärts durch das sequenzielle probabilistische Modell (140) auf das entsprechende Anfangszustandsbild (ISI1) und Schreiben (1800) des mindestens einen tatsächlichen Eigenschaftswerts (PVa1) als neuen Eintrag in die probenspezifische Datenstruktur (300);

Aktualisieren (1900) des sequentiellen probabilistischen Modells (140) oder des neuronalen Netzwerks (120) oder beider, wobei:

das Aktualisieren (1910) des sequentiellen probabilistischen Modells (140) das Aktualisieren von bedingten Wahrscheinlichkeitsverteilungen des sequentiellen probabilistischen Modells (140) auf der Grundlage des mindestens einen tatsächlichen Eigenschaftswerts unter Berücksichtigung von Unsicherheiten im Probenverarbeitungsverfahren (200) umfasst; und

das Aktualisieren (1920) des neuronalen Netzwerks (120) umfasst das Einleiten eines automatischen Nachtrainings des neuronalen Netzwerks mit zusätzlichen Trainingsdaten (ISI*|PVa*) zum Anpassen der Gewichte des neuronalen Netzwerks, wobei die zusätzlichen Trainingsdaten Paare aus Anfangszustandsbildern (ISI*) und entsprechenden tatsächlichen Eigenschaftswerten (PVa*) sind, die aus früheren Stream-Proben des bestimmten Probentyps (ST1) gesammelt wurden.

2. Verfahren nach einem der Ansprüche 1, wobei das sequenzielle probabilistische Modell (140) das Verarbeitungsverfahren als eine Abfolge möglicher Ereignisse beschreibt, bei der die Wahrscheinlichkeit jedes Ereignisses vom im vorherigen Ereignis erreichten Zustand abhängt.

3. Verfahren nach einem der vorstehenden Ansprüche, wobei das sequenzielle probabilistische Modell (140) eine Markov-Kette ist, bei der die Wahrscheinlichkeit jedes Ereignisses nur vom im vorherigen Ereignis erreichten Zustand abhängt.

4. Verfahren nach einem der vorstehenden Ansprüche, wobei die probenspezifische Datenstruktur eine probenspezifische Blockchain ist.

5. Verfahren nach einem der vorstehenden Ansprüche, wobei Eigenschaften der physikalischen Probe aus der realen Welt eines oder mehrere der folgenden Merkmale umfassen: physikalische, chemische, biologische, mechanische oder sensorische Eigenschaften der Probe.

6. Verfahren nach einem der vorstehenden Ansprüche, wobei, falls das neuronale Netzwerk ein Klassifikations-Neuronales Netzwerk ist, der Probentyp gemäß vordefinierten Probentypklassen bestimmt wird, die mit der genannten Stream-Probe assoziiert sind, oder, falls das neuronale Netzwerk ein Regressions-Neuronales Netzwerk ist, der Probentyp als Regressionswert bestimmt wird.

7. Verfahren nach einem der vorstehenden Ansprüche, wobei ein automatisches Nachtrainieren des neuronalen Netzwerks initiiert wird, falls die Anzahl der gesammelten Trainingsdatenpaare einen vordefinierten Schwellenwert überschreitet.

8. Verfahren nach einem der vorstehenden Ansprüche, wobei die Aktualisierung von dem vom neuronalen Netzwerk für den ermittelten Probentyp bereitgestellten Konfidenzwert abhängt, **dadurch gekennzeichnet, dass**:

falls der Konfidenzwert unter einem vordefinierten Mindestschwellenwert liegt, nur das neuronale Netzwerk aktualisiert wird;

falls der Konfidenzwert über einem vordefinierten Höchstschwellenwert liegt, nur das sequenzielle probabilistische Modell aktualisiert wird; und

Wenn der Konfidenzwert in einem Bereich zwischen dem vordefinierten Mindestschwellenwert und dem vordefinierten Höchstschwellenwert liegt, werden das neuronale Netzwerk und das sequenzielle probabilistische Modell aktualisiert.

9. Ein Computerprogrammprodukt, das, wenn es in einen Speicher einer Rechenvorrichtung geladen und von mindestens einem Prozessor der Rechenvorrichtung ausgeführt wird, die Schritte des computerimplementierten Verfahrens gemäß einem der vorstehenden Ansprüche ausführt.

10. Ein Computersystem (100) zur Bewertung mindestens einer Eigenschaft einer physikalischen Stream-Probe, wobei die mindestens eine Eigenschaft ein relevanter Parameter für die Optimierung eines Stream-Probenverarbeitungsverfahrens (200) ist, wobei die Stream-Probe kontinuierlich durch das Stream-Probenverarbeitungsverfahren läuft, wobei das System umfasst:

eine erste Schnittstelle, die dazu ausgelegt ist, ein Anfangszustandsbild (ISI1) zu empfangen, das für die mindestens eine Eigenschaft der Stream-Probe (S_b) zu Beginn des Stream-Probenverarbeitungsverfahrens (200) charakteristisch ist;

ein jeweils vortrainiertes neuronales Netzwerk (120), das dazu ausgelegt ist, auf der Grundlage des Anfangszustandsbildes (ISI) einen Probentyp (ST1) mit einem entsprechenden Konfidenzwert (CV1) für die Stream-Probe (S_b) zu bestimmen;

ein sequenzielles probabilistische Modell (140) des Stream-Probenverarbeitungsverfahrens, das dazu ausgelegt ist, auf der Grundlage des Probentyps (ST1) mindestens einen Ziel-Eigenschaftswert (PVt1) der Stream-Probe vorherzusagen, wobei das probabilistische Modell von einem oder mehreren Steuerparametern abhängig ist, die das Stream-Probenverarbeitungsverfahren steuern, wobei der eine oder die mehreren Steuerparameter von Verarbeitungsmitteln abgerufen werden, die das Stream-Verarbeitungsverfahren ausführen;

eine zweite Schnittstelle, die dazu ausgelegt ist, den mindestens einen Eigenschaftszielwert (PVt1) in eine probenspezifische Datenstruktur (300) zu schreiben und den einen oder die mehreren Steuerparameter (CP*) zur Steuerung des Stream-Probenverarbeitungsverfahrens (200) bereitzustellen;

eine dritte Schnittstelle, die dazu ausgelegt ist, am Ende des Stream-Probenverarbeitungsverfahren (200) ein Messergebnis (MVe) für mindestens einen tatsächlichen Eigenschaftswert (PVa1) der verarbeiteten Stream-Probe (S_e) zu empfangen, wobei sich der mindestens eine tatsächliche Eigenschaftswert (PVa1) auf den mindestens einen vorhergesagten Ziel-Eigenschaftswert (PVt1) bezieht;

ein Abbildungsmodul (130), das dazu ausgelegt ist, den mindestens einen tatsächlichen Eigenschaftswert (PVa1) rückwärts durch das sequenzielle probabilistische Modell (140) auf das entsprechende Anfangszustandsbild (ISI1) abzubilden;

wobei die zweite Schnittstelle ferner dazu ausgelegt ist, den mindestens einen tatsächlichen Eigenschaftswert (PVa1) als neuen Eintrag in die probenspezifische Datenstruktur (300) zu schreiben; und

ein Aktualisierungsmodul (150), das dazu ausgelegt ist, das sequenzielle probabilistische Modell (140) oder das neuronale Netzwerk (120) oder beide zu aktualisieren, wobei:

die Aktualisierung des sequentiellen probabilistischen Modells (140) die Aktualisierung der bedingten Wahrscheinlichkeitsverteilungen des sequentiellen probabilistischen Modells (140) auf der Grundlage des mindestens einen tatsächlichen Eigenschaftswerts (PVa1) unter Berücksichtigung von Unsicherheiten im Probenverarbeitungsverfahren (200) umfasst; und

die Aktualisierung des neuronalen Netzwerks (120) umfasst das Einleiten eines automatischen Nachtrainings des neuronalen Netzwerks mit zusätzlichen Trainingsdaten (ISI*|PVa*) zum Anpassen der Gewichte des neuronalen Netzwerks, wobei die zusätzlichen Trainingsdaten Paare aus Anfangszustandsbildern (ISI*) und entsprechenden tatsächlichen Eigenschaftswerten (PVa*) sind, die aus früheren Stream-Proben des bestimmten Probentyps (ST1) gesammelt wurden.

11. Das System nach Anspruch 10, wobei das sequenzielle probabilistische Modell (140) das Verarbeitungsverfahren als eine Abfolge möglicher Ereignisse beschreibt, bei der die Wahrscheinlichkeit jedes Ereignisses vom im vorherigen Ereignis erreichten Zustand abhängt.

12. Das System nach Anspruch 10 oder 11, wobei das sequenzielle probabilistische Modell (140) eine Markov-Kette ist, bei der die Wahrscheinlichkeit jedes Ereignisses nur vom im vorherigen Ereignis erreichten Zustand abhängt.

13. Das System nach einem der Ansprüche 10 bis 12, wobei, falls das neuronale Netzwerk ein Klassifikations-Neuralnetzwerk ist, der Probentyp gemäß vordefinierten Probentypklassen bestimmt wird, die mit der genannten Stream-Probe assoziiert sind, oder, falls das neuronale Netzwerk ein Regressions-Neuralnetzwerk ist, der Probentyp als Regressionswert bestimmt wird.

14. System nach einem der Ansprüche 10 bis 13, wobei das Aktualisierungsmodul (140) so ausgelegt ist, dass es ein automatisches Nachtrainieren des neuronalen Netzwerks initiiert, falls die Anzahl der gesammelten Trainingsdatenpaare einen vordefinierten Schwellenwert überschreitet.

15. System nach einem der Ansprüche 10 bis 14, wobei das Aktualisierungsmodul (160) von dem vom neuronalen Netzwerk für den ermittelten Probentyp bereitgestellten Konfidenzwert abhängt, **dadurch gekennzeichnet, dass**:

falls der Konfidenzwert unter einem vordefinierten Mindestschwellenwert liegt, nur das neuronale Netzwerk aktualisiert wird;
falls der Konfidenzwert über einem vordefinierten Maximalschwellenwert liegt, nur das sequenzielle probabilistische Modell aktualisiert wird; und
falls der Konfidenzwert in einem Bereich zwischen dem vordefinierten Minimalschwellenwert und dem vordefinierten Maximalschwellenwert liegt, das neuronale Netzwerk und das sequenzielle probabilistische Modell aktualisiert werden.

## Revendications

1. Procédé mis en œuvre par ordinateur (1000) destiné à évaluer au moins une propriété d'un échantillon de flux physique, dans lequel ladite au moins une propriété est un paramètre pertinent pour l'optimisation d'un procédé de traitement d'échantillon de flux, dans lequel l'échantillon de flux transite par des moyens de traitement exécutant ledit procédé de traitement d'échantillon de flux, le procédé mis en œuvre par ordinateur comprenant :

la réception (1100) d'une image d'état initial (ISI1) caractéristique de ladite au moins une propriété dudit échantillon de flux (S_b) au début du procédé de traitement d'échantillon de flux (200) ;
par un réseau neuronal respectivement pré-entraîné (120), la détermination (1200), sur la base de l'image d'état initial (ISI), d'un type d'échantillon (ST1) avec une valeur de confiance correspondante (CV1) pour ledit échantillon de flux (S_b) ;
sur la base du type d'échantillon (ST1), prédire (1300), à l'aide d'un modèle probabiliste séquentiel (140) du procédé de traitement d'échantillons de flux, au moins une valeur cible de propriété (PVt1) de l'échantillon de flux, dans lequel le modèle probabiliste est conditionné par un ou plusieurs paramètres de contrôle qui commandent le procédé de traitement d'échantillons de flux, dans lequel le ou les paramètres de contrôle sont récupérés à partir des moyens de traitement qui exécutent le procédé de traitement de flux ;
écrire (1400) ladite au moins une valeur cible de propriété (PVt1) dans une structure de données spécifique à l'échantillon (300), et fournir (1500) le ou les paramètres de contrôle (CP*) pour contrôler la méthode de traitement d'échantillon de flux (200) ;
recevoir (1600) un résultat de mesure (MVe) pour au moins une valeur de propriété réelle (PVa1) de l'échantillon de flux traité (S_e) à la fin de la méthode de traitement d'échantillon (200), dans laquelle ladite au moins une valeur de propriété réelle (PVa1) se rapporte à ladite au moins une valeur de propriété cible prédite (PVt1) ;
mettre en correspondance (1700) la au moins une valeur de propriété réelle (PVa1) en remontant à travers le modèle probabiliste séquentiel (140) jusqu'à l'image d'état initial correspondante (ISI1), et écrire (1800) la au moins une valeur de propriété réelle (PVa1) en tant que nouvelle entrée dans la structure de données spécifique à l'échantillon (300) ;
mettre à jour (1900) le modèle probabiliste séquentiel (140) ou le réseau neuronal (120) ou les deux, dans lequel :

la mise à jour (1910) du modèle probabiliste séquentiel (140) comprend la mise à jour des distributions de probabilités conditionnelles du modèle probabiliste séquentiel (140) sur la base de la au moins une valeur de propriété réelle en tenant compte des incertitudes dans la méthode de traitement d'échantillon (200) ; et
la mise à jour (1920) du réseau neuronal (120) comprend le lancement d'un réentraînement automatique du réseau neuronal avec des données d'entraînement supplémentaires (ISI*|PVa*) pour ajuster les poids du réseau neuronal, dans lequel les données d'entraînement supplémentaires sont des paires d'images d'état initial (ISI*) et de valeurs de propriété réelles respectives (PVa*) collectées à partir d'échantillons de flux antérieurs du type d'échantillon déterminé (ST1).

2. Procédé selon l'une quelconque des revendications 1, dans lequel le modèle probabiliste séquentiel (140) décrit la méthode de traitement comme une séquence d'événements possibles dans laquelle la probabilité de chaque événement dépend de l'état atteint lors de l'événement précédent.

3. Procédé selon l'une quelconque des revendications précédentes, dans lequel le modèle probabiliste séquentiel (140) est une chaîne de Markov dans laquelle la probabilité de chaque événement dépend uniquement de l'état atteint lors de l'événement précédent.

4. Procédé selon l'une quelconque des revendications précédentes, dans lequel la structure de données spécifique à l'échantillon est une blockchain spécifique à l'échantillon.

5. Procédé selon l'une quelconque des revendications précédentes, dans lequel les propriétés de l'échantillon physique du monde réel comprennent une ou plusieurs des caractéristiques suivantes : caractéristiques physiques, chimiques, biologiques, mécaniques ou sensorielles dudit échantillon.

6. Procédé selon l'une quelconque des revendications précédentes, dans lequel, dans le cas où le réseau neuronal est un réseau neuronal de classification, le type d'échantillon est déterminé en fonction de classes de types d'échantillons prédéfinies associées audit échantillon de flux, ou, dans le cas où le réseau neuronal est un réseau neuronal de régression, le type d'échantillon est déterminé comme valeur de régression.

7. Procédé selon l'une quelconque des revendications précédentes, dans lequel un réentraînement automatique du réseau neuronal est lancé dans le cas où le nombre de paires de données d'entraînement collectées dépasse un seuil prédéfini.

8. Procédé selon l'une quelconque des revendications précédentes, dans lequel la mise à jour dépend de la valeur de confiance fournie par le réseau neuronal pour le type d'échantillon déterminé, **caractérisé en ce que** :

   dans le cas où la valeur de confiance est inférieure à un seuil minimum prédéfini, seul le réseau neuronal est mis à jour ;
   dans le cas où la valeur de confiance est supérieure à un seuil maximum prédéfini, seul le modèle probabiliste séquentiel est mis à jour ; et
   Si la valeur de confiance se situe dans une plage comprise entre le seuil minimum prédéfini et le seuil maximum prédéfini, le réseau neuronal et le modèle probabiliste séquentiel sont mis à jour.

9. Produit logiciel qui, lorsqu'il est chargé dans une mémoire d'un dispositif informatique et exécuté par au moins un processeur dudit dispositif, exécute les étapes du procédé mis en œuvre par ordinateur selon l'une quelconque des revendications précédentes.

10. Système informatique (100) destiné à évaluer au moins une propriété d'un échantillon de flux physique, dans lequel ladite au moins une propriété est un paramètre pertinent pour l'optimisation d'un procédé de traitement d'échantillon de flux (200), dans lequel l'échantillon de flux se déplace en continu à travers ledit procédé de traitement d'échantillon de flux, le système comprenant :

   une première interface adaptée pour recevoir une image d'état initial (ISI1) caractéristique de ladite au moins une propriété dudit échantillon de flux (S_b) au début du procédé de traitement d'échantillon de flux (200) ;
   un réseau neuronal (120) pré-entraîné de manière appropriée, adapté pour déterminer, sur la base de l'image d'état initial (ISI), un type d'échantillon (ST1) avec une valeur de confiance correspondante (CV1) pour ledit échantillon de flux (S_b) ;
   un modèle probabiliste séquentiel (140) du procédé de traitement d'échantillons de flux, adapté pour prédire, sur la base du type d'échantillon (ST1), au moins une valeur cible de propriété (PVt1) de l'échantillon de flux, dans lequel le modèle probabiliste est conditionné par un ou plusieurs paramètres de contrôle qui commandent le procédé de traitement d'échantillons de flux, dans lequel le ou les paramètres de contrôle sont récupérés à partir de moyens de traitement qui exécutent le procédé de traitement de flux ;
   une deuxième interface adaptée pour écrire la au moins une valeur cible de propriété (PVt1) dans une structure de données spécifique à l'échantillon (300), et pour fournir le ou les paramètres de contrôle (CP*) destinés à contrôler la méthode de traitement d'échantillons de flux (200) ;

une troisième interface adaptée pour recevoir un résultat de mesure (MVe) pour au moins une valeur de propriété réelle (PVa1) de l'échantillon de flux traité (S_e) à la fin de la méthode de traitement d'échantillon (200), dans laquelle ladite au moins une valeur de propriété réelle (PVa1) se rapporte à ladite au moins une valeur de propriété cible prédite (PVt1) ;

un module de mappage (130) adapté pour mapper la au moins une valeur de propriété réelle (PVa1) en remontant à travers le modèle probabiliste séquentiel (140) jusqu'à l'image d'état initial correspondante (ISI1) ;

la deuxième interface étant en outre adaptée pour écrire la au moins une valeur de propriété réelle (PVa1) en tant que nouvelle entrée dans la structure de données spécifique à l'échantillon (300) ; et

un module de mise à jour (150) adapté pour mettre à jour le modèle probabiliste séquentiel (140) ou le réseau neuronal (120) ou les deux, dans lequel :

la mise à jour du modèle probabiliste séquentiel (140) comprend la mise à jour des distributions de probabilité conditionnelles du modèle probabiliste séquentiel (140) sur la base de la au moins une valeur de propriété réelle (PVa1) en tenant compte des incertitudes dans la méthode de traitement d'échantillon (200) ; et

la mise à jour du réseau neuronal (120) comprend le lancement d'un réentraînement automatique du réseau neuronal avec des données d'entraînement supplémentaires (ISI*|PVa*) pour ajuster les poids du réseau neuronal, dans lequel les données d'entraînement supplémentaires sont des paires d'images d'état initial (ISI*) et de valeurs de propriété réelles respectives (PVa*) collectées à partir d'échantillons de flux antérieurs du type d'échantillon déterminé (ST1).

11. Le système selon la revendication 10, dans lequel le modèle probabiliste séquentiel (140) décrit la méthode de traitement comme une séquence d'événements possibles dans laquelle la probabilité de chaque événement dépend de l'état atteint lors de l'événement précédent.

12. Le système selon la revendication 10 ou 11, dans lequel le modèle probabiliste séquentiel (140) est une chaîne de Markov dans laquelle la probabilité de chaque événement dépend uniquement de l'état atteint lors de l'événement précédent.

13. Système selon l'une quelconque des revendications 10 à 12, dans lequel, dans le cas où le réseau neuronal est un réseau neuronal de classification, le type d'échantillon est déterminé en fonction de classes de types d'échantillons prédéfinies associées audit échantillon de flux, ou, dans le cas où le réseau neuronal est un réseau neuronal de régression, le type d'échantillon est déterminé comme valeur de régression.

14. Système selon l'une quelconque des revendications 10 à 13, dans lequel le module de mise à jour (140) est adapté pour lancer un réentraînement automatique du réseau neuronal dans le cas où le nombre de paires de données d'entraînement collectées dépasse un seuil prédéfini.

15. Système selon l'une quelconque des revendications 10 à 14, dans lequel le module de mise à jour (160) dépend de la valeur de confiance fournie par le réseau neuronal pour le type d'échantillon déterminé, **caractérisé en ce que** :

Dans le cas où la valeur de confiance est inférieure à un seuil minimum prédéfini, seul le réseau neuronal est mis à jour ;

Si la valeur de confiance est supérieure à un seuil maximal prédéfini, seul le modèle probabiliste séquentiel est mis à jour ; et

Si la valeur de confiance se situe dans une plage comprise entre le seuil minimal prédéfini et le seuil maximal prédéfini, le réseau neuronal et le modèle probabiliste séquentiel sont mis à jour.

SPM <u>200</u>

S_b

S_i

S_e

210

ISl1

Sik

Si2

Si1

Sem

Se2

Se1

MVi

MVe

<u>110</u>

NN
<u>120</u>

ST1 /
CV1

PVa1

130

150

PM
<u>140</u>

130

(ISI* | PVa*)

150

CP*

PVt1

<u>300</u>

<u>100</u> computer system

FIG. 1

1000

Receiving initial state image being characteristic for a property of said stream sample at the beginning of stream sample processing method

1100

determining, based on the initial state image, a sample type with corresponding confidence value for said stream sample

1200

based on the sample type, predicting a target property value of the stream sample, and observe one or more control parameters for the stream sample processing method

1300

writing property target value into sample specific storage location

1400

providing the one or more control parameters for controlling the stream sample processing method

1500

receiving measuring result for actual property value of the processed stream sample at the end of the sample processing method

1600

mapping actual property value backwards through sequential probabilistic model to corresponding initial state image

1700

writing actual property value as new entry to sample specific storage location

1800

updating sequential probabilistic model or neural network or both

1900

FIG. 2A

EP 4 685 582 B1

---

1900

updating sequential probabilistic model by updating conditional probability distributions of the sequential probabilistic model based on actual property value taking into account uncertainties in the sample processing method — 1910

updating neural network by initiating automatic re-training of the neural network with additional training data for adjusting weights of the neural network, wherein the additional training data are pairs of initial state images and respective actual property values collected from earlier stream samples of the determined sample type — 1920

## FIG. 2B

---

**Algorithm 2 Retrain Neural Network**

1: **function** RETRAINNN($\mu_{\text{true}}$, image)
2:     $\text{class}_{\text{true}} \leftarrow \text{lookupClass}(\mu_{\text{true}})$
3:     $\mu_{\text{class}} \leftarrow \text{lookupMean}(\text{class}_{\text{true}})$
4:     $\sigma^2_{\text{class}} \leftarrow \text{lookupVariance}(\text{class}_{\text{true}})$
5:     $\delta \leftarrow |\mu_{\text{true}} - \mu_{\text{class}}|$
6:     **if** $\delta > \text{threshold}$ **then**
7:         Create new training example (image, $\text{class}_{\text{true}}$)
8:         Add new training example to dataset
9:         Retrain Neural Network with updated dataset
10:     **else**
11:         $\mu_{\text{class}} \leftarrow (1 - \alpha)\mu_{\text{class}} + \alpha\mu_{\text{true}}$
12:         $\sigma^2_{\text{class}} \leftarrow (1 - \alpha)\sigma^2_{\text{class}} + \alpha(\mu_{\text{true}} - \mu_{\text{class}})^2$
13:     **end if**
14: **end function**

402

## FIG. 4B

FIG. 3

401

---

**Algorithm 1** Update States Based on True Measurement

---

1: **function** UPDATESTATES($\mu_{\text{true}}$, burned_waste)

2:     contributing_units ← findContributors(burned_waste)

3:     $\mu_{\text{est}}$ ← calcEstimatedMean(contributing_units)

4:     **for each** $W_j$ in contributing_units **do**

5:         $\omega_j \leftarrow G(W_j.x, W_j.y \mid \text{burned\_waste}.x, \text{burned\_waste}.y)$

6:         Kalman gain $K_j \leftarrow \omega_j / \sum(\omega_j$ for all contributing_units)

7:         $W_j.\mu_{t+1} \leftarrow W_j.\mu_t + K_j \cdot (\mu_{\text{true}} - \mu_{\text{est}})$

8:         $W_j.\sigma^2_{t+1} \leftarrow (1 - K_j) \cdot W_j.\sigma^2_t$

9:         $W_j.M_{t+1} \leftarrow W_j.M_t \cdot (1 - K_j)$

10:     **end for**

11:     **for each** $W_j$ in contributing_units **do**

12:         **if** $W_j$ is not affected by any previous operations or is initial state **then**

13:             break

14:         **else**

15:             updateStates($W_j.\mu_{t+1}, W_j$)

16:         **end if**

17:     **end for**

18: **end function**

---

# FIG. 4A

FIG. 5

EP 4 685 582 B1

**EP 4 685 582 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5121467 A
- KR 102619347 B1
- JP 2022092448 A